(19) Europäisches Patentamt
European Patent Office
Office européen des brevets

(11) **EP 4 155 856 A1**

(12) # EUROPEAN PATENT APPLICATION
published in accordance with Art. 153(4) EPC

(43) Date of publication:
**29.03.2023 Bulletin 2023/13**

(21) Application number: **20939704.1**

(22) Date of filing: **09.06.2020**

(51) International Patent Classification (IPC):
**G05D 1/02** [(2006.01)]

(52) Cooperative Patent Classification (CPC):
**G06N 20/00**

(86) International application number:
**PCT/CN2020/095069**

(87) International publication number:
**WO 2021/248301 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang District,**
**Shenzhen,**
**Guangdong 518129 (CN)**

(72) Inventors:
• **YU, Zhiqiang**
  **Shenzhen, Guangdong 518129 (CN)**
• **SHEN, Peiwen**
  **Shenzhen, Guangdong 518129 (CN)**
• **HUANG, Chengkai**
  **Shenzhen, Guangdong 518129 (CN)**
• **CHEN, Yu**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **SELF-LEARNING METHOD AND APPARATUS FOR AUTONOMOUS DRIVING SYSTEM, DEVICE, AND STORAGE MEDIUM**

(57)  This application provides a self-learning method and apparatus in an autonomous driving system, a device, and a storage medium. The method includes: obtaining driving data; removing abnormal data from the driving data to obtain to-be-processed data; and selecting a to-be-learned driving parameter based on the to-be-processed data, and calculating the to-be-processed data according to a calculation rule corresponding to the driving parameter, to obtain a learning result of the driving parameter, where the learning result is used to indicate the autonomous driving system to set the driving parameter in an autonomous driving trip based on the learning result. The method is applied to an intelligent vehicle, a networked vehicle, and an autonomous driving vehicle, to ensure that data obtained by the autonomous driving system through self-learning complies with an operational design domain of a vehicle, a traffic rule, a safety driving rule, and the like, so that an autonomous driving system parameter obtained through self-learning can meet a driving habit of a user, and also improve safety and user experience.

FIG. 2

## Description

### TECHNICAL FIELD

This application relates to autonomous driving technologies, and in particular, to a self-learning method and apparatus in an autonomous driving system, a device, and a storage medium.

### BACKGROUND

As a loading rate of an advanced driver assistance system gradually increases and autonomous driving technologies develop in recent years, increasingly more users learn of vehicles with advanced driver assistance systems or autonomous driving systems.

Many performance parameters, such as time headway and sensitivity of a forward collision warning system, in an advanced driver assistance system or an autonomous driving system may be calibrated at delivery. In this case, a user cannot perform matching and adjustment based on a driving habit of the user. Consequently, user experience is poor. With increasing of functions of the advanced driver assistance system or the autonomous driving system, increasingly more personalized settings that can be freely selected by the user are provided. For example, for time headway in an adaptive cruise system, a plurality of options are usually provided for selection and setting by the user. The setting options are usually described as "nearest", "closer", "medium", "farther", and "farthest". In this way, the user can make corresponding personalized settings before driving.

However, for these personalized settings that can be selected by the user, the user usually cannot accurately learn which setting is suitable for the driving habit of the user when driving a vehicle. Therefore, if a setting option selected by the user actually does not meet the driving habit of the user, user experience is still poor.

### SUMMARY

This application provides a self-learning method and apparatus in an autonomous driving system, a device, and a storage medium, so that settings of the autonomous driving system better meet a driving habit of a user, and improves user experience.

According to a first aspect, this application provides a self-learning method in an autonomous driving system, including:

obtaining driving data;

removing abnormal data from the driving data to obtain to-be-processed data; and

selecting a to-be-learned driving parameter based on the to-be-processed data, and calculating the to-be-processed data according to a calculation rule corresponding to the driving parameter, to obtain a learning result of the driving parameter, where the learning result is used to indicate the autonomous driving system to set the driving parameter in an autonomous driving trip based on the learning result.

In a feasible implementation, the driving data includes manual driving data and/or autonomous driving takeover data.

In the foregoing method, the driving data is obtained, the abnormal data in the driving data is removed, and the learning result of the driving parameter is calculated based on data obtained after the abnormal data is removed, so as to ensure that data obtained by the autonomous driving system through self-learning complies with an operational design domain of a vehicle, a traffic rule, a safety driving rule, and the like, so that an autonomous driving system parameter obtained through self-learning can meet a driving habit of a user, and also improve safety and user experience.

In a feasible implementation, the removing abnormal data from the driving data includes:

determining the abnormal data in the driving data according to a preset rule; and

deleting the abnormal data.

In a feasible implementation, the selecting a to-be-learned driving parameter based on the to-be-processed data includes:

selecting, from a plurality of preset scenarios, a target scenario that matches the to-be-processed data, and the driving parameter corresponding to the target scenario, where each preset scenario corresponds to at least one driving parameter.

In a feasible implementation, the selecting, from a plurality of preset scenarios, a target scenario that matches the to-be-processed data includes:

calculating a driving data feature of the to-be-processed data, and comparing the driving data feature of the to-be-processed data with a driving data feature of each of the plurality of preset scenarios, to obtain the target scenario that is in the plurality of preset scenarios and that matches the to-be-processed data.

In the foregoing method, scenario screening is performed by using a preset scenario, and scenario characteristics corresponding to different trips are quickly identified, so as to improve self-learning efficiency and accuracy.

In a feasible implementation, the driving data includes driving data of a current trip and/or driving data of a historical trip;

the removing abnormal data from the driving data to obtain to-be-processed data includes:

removing abnormal data from driving data of each of the current trip and/or the historical trip, to obtain to-be-processed data of each trip; and
the selecting a to-be-learned driving parameter based on the to-be-processed data, and calculating the to-be-processed data according to a calculation rule corresponding to the driving parameter, to obtain a learning result of the driving parameter includes:

selecting a to-be-learned driving parameter in each trip based on the to-be-processed data of each trip, and calculating the to-be-processed data of each trip according to a calculation rule corresponding to the to-be-learned driving parameter in each trip, to obtain a learning result of the to-be-learned driving parameter in each trip; and
processing learning results of trips that have a same to-be-learned driving parameter, to obtain the learning result of the driving parameter.

In a feasible implementation, the processing learning results of trips that have a same to-be-learned driving parameter, to obtain the learning result of the driving parameter includes:
performing weighting processing on the learning results of the plurality of trips that have the same to-be-learned driving parameter, to obtain the learning result of the driving parameter.

In the foregoing method, comprehensive processing is performed on learning results of the current trip and the historical trip, so that a finally obtained learning result better meets a long-term driving habit of the user, and improves user experience.

In a feasible implementation, the processing learning results of trips that have a same to-be-learned driving parameter, to obtain the learning result of the driving parameter includes:

processing the learning results of the plurality of trips that have the same to-be-learned driving parameter, to obtain a current learning result of the driving parameter; and
determining the current learning result as the learning result of the driving parameter if total duration of the trips that have the same to-be-learned driving parameter reaches preset duration, or a total mileage of the trips that have the same to-be-learned driving parameter reaches a preset mileage.

In a feasible implementation, the method further includes:
calculating a current learning progress of the driving parameter based on the preset duration and the total duration of the trips that have the same to-be-learned driving parameter, or based on the preset mileage and the total mileage of the trips that have the same to-be-learned driving parameter.

In the foregoing method, duration or mileage that has been learned by the user in the current trip is calculated, so that the user can learn the learning progress in real time.

In a feasible implementation, when the driving data includes driving data of a current trip, the method further includes:

outputting first prompt information, where the first prompt information is used to prompt a user whether to store a learning result of a driving parameter in the current trip; and
receiving a storage instruction entered by a user, where the storage instruction is used to instruct to store the learning result of the driving parameter in the current trip.

In a feasible implementation, the method further includes:
deleting the learning result of the driving parameter in the current trip if a deletion instruction entered by the user is received.

In the foregoing method, the user may autonomously select to store or delete the learning result of the driving parameter in the current trip, so as to avoid that the autonomous driving system learns data that does not meet the driving habit of the user.

In a feasible implementation, the method further includes:

comparing the learning result with a preset threshold range; and
updating the learning result based on the preset threshold range if the learning result is beyond the preset threshold range.

In a feasible implementation, the updating the learning result based on the preset threshold range if the learning result is beyond the preset threshold range includes:

updating the learning result to an upper limit value of the preset threshold range if the learning result is greater than the upper limit value of the preset threshold range; or
updating the learning result to a lower limit value of the preset threshold range if the learning result is less than the lower limit value of the preset threshold range.

In a feasible implementation, the method further includes:

comparing the learning result with a plurality of preset values;
determining a target preset value that is in the plurality of preset values and that has a smallest difference from the learning result; and
updating the learning result to the target preset value.

In the foregoing method, the learning result is updated by using the preset value, so as to further ensure that the autonomous driving system parameter is within a safety range.
In a feasible implementation, the method further includes:
outputting the learning result to a user interface.
In a feasible implementation, before the obtaining driving data of a current trip, the method further includes:

identifying a target user currently driving a vehicle;
correspondingly, the obtaining driving data includes:

obtaining driving data corresponding to the target user; and
the outputting the learning result to a user interface including:
storing a correspondence between the learning result and the target user, and outputting the correspondence to the user interface.

In the foregoing method, the user is identified before the vehicle drives, so that a learning result in a subsequent trip is associated with the user, so as to implement user-level self-learning.
In a feasible implementation, the identifying a target user currently driving a vehicle includes:

obtaining information about the target user; and
matching the information about the target user with prestored user information, and determining a user corresponding to matched prestored user information as the target user.

In a feasible implementation, the method further includes:
outputting second prompt information if there is no prestored user information that matches the information about the target user, where the second prompt information is used to prompt the user whether to create a user.
In a feasible implementation, the identifying a target user currently driving a vehicle includes:

receiving an identity confirmation instruction entered by the user; and
determining the target user based on the identity confirmation instruction.

In a feasible implementation, the method further includes:

receiving an instruction for creating a user that is entered by the user; and
obtaining and storing user information.

In a feasible implementation, before the obtaining driving data, the method further includes:
receiving an activation instruction entered by the user, where the activation instruction is used to instruct to start self-learning of the autonomous driving system.
In the foregoing method, the user may autonomously select whether to start a self-learning function of the autonomous driving system, thereby increasing human-computer interaction and improving user experience.

In a feasible implementation, the receiving an activation instruction entered by the user includes:
receiving the activation instruction entered by the user through the user interface.

In a feasible implementation, the receiving an activation instruction entered by the user includes:
receiving the activation instruction entered by the user by using a physical button.

In a feasible implementation, the receiving an activation instruction entered by the user includes:
receiving a voice activation instruction entered by the user.

In a feasible implementation, the method further includes:
sending the learning result to a target device.

In a feasible implementation, the target device is a target vehicle, and before the sending the learning result to a target device, the method further includes:

receiving a data migration instruction, where the data migration instruction is used to instruct to migrate the learning result to the target vehicle; and

the sending the learning result to a target device includes:

determining whether an autonomous driving system of the target vehicle is the same as an autonomous driving system of a current vehicle;

if the autonomous driving system of the target vehicle is the same as the autonomous driving system of the current vehicle, continuing to determine whether a vehicle type of the target vehicle is the same as a vehicle type of the current vehicle; and

sending the learning result to the target vehicle if the vehicle type of the target vehicle is the same as the vehicle type of the current vehicle.

In a feasible implementation, the method further includes:
if the vehicle type of the target vehicle is different from the vehicle type of the current vehicle, performing parameter conversion on the learning result based on a system parameter that is in the target vehicle and that is related to autonomous driving performance, and sending a converted learning result to the target vehicle.

In a feasible implementation, the method further includes:
outputting prompt information if the autonomous driving system of the target vehicle is different from the autonomous driving system of the current vehicle, where the prompt information is used to prompt the user that migration of the learning result to the target vehicle is not supported.

In the foregoing method, the self-learning result of the autonomous driving system is backed up and migrated, so that repeated learning of vehicles on a same platform or vehicles of a same vehicle type is avoided, and one-time learning and a plurality of times of use is implemented, so as to improve user experience.

According to a second aspect, this application provides a self-learning apparatus in an autonomous driving system, including:

an obtaining module, configured to obtain driving data;

a processing module, configured to remove abnormal data from the driving data to obtain to-be-processed data; and

a learning module, configured to select a to-be-learned driving parameter based on the to-be-processed data, and calculate the to-be-processed data according to a calculation rule corresponding to the driving parameter, to obtain a learning result of the driving parameter, where the learning result is used to indicate the autonomous driving system to set the driving parameter in an autonomous driving trip based on the learning result.

In a feasible implementation, the driving data includes manual driving data and/or autonomous driving takeover data.

In a feasible implementation, the processing module is configured to:

determine the abnormal data in the driving data according to a preset rule; and
delete the abnormal data.

In a feasible implementation, the learning module is configured to:
select, from a plurality of preset scenarios, a target scenario that matches the to-be-processed data, and the driving parameter corresponding to the target scenario, where each preset scenario corresponds to at least one driving parameter.

In a feasible implementation, the learning module is specifically configured to:
calculate a driving data feature of the to-be-processed data, and compare the driving data feature of the to-be-processed data with a driving data feature of each of the plurality of preset scenarios, to obtain the target scenario that is in the plurality of preset scenarios and that matches the to-be-processed data.

In a feasible implementation, the driving data includes driving data of a current trip and/or driving data of a historical trip;

the processing module is configured to remove abnormal data from driving data of each of the current trip and/or the historical trip, to obtain to-be-processed data of each trip; and
the learning module is configured to: select a to-be-learned driving parameter in each trip based on the to-be-processed data of each trip, and calculate the to-be-processed data of each trip according to a calculation rule corresponding to the to-be-learned driving parameter in each trip, to obtain a learning result of the to-be-learned driving parameter in each trip; and process learning results of trips that have a same to-be-learned driving parameter, to obtain the learning result of the driving parameter.

In a feasible implementation, the learning module is configured to:
perform weighting processing on the learning results of the plurality of trips that have the same to-be-learned driving parameter, to obtain the learning result of the driving parameter.

In a feasible implementation, the learning module is configured to:

process the learning results of the plurality of trips that have the same to-be-learned driving parameter, to obtain a current learning result of the driving parameter; and
determine the current learning result as the learning result of the driving parameter if total duration of the trips that have the same to-be-learned driving parameter reaches preset duration, or a total mileage of the trips that have the same to-be-learned driving parameter reaches a preset mileage.

In a feasible implementation, the learning module is further configured to:
calculate a current learning progress of the driving parameter based on the preset duration and the total duration of the trips that have the same to-be-learned driving parameter, or based on the preset mileage and the total mileage of the trips that have the same to-be-learned driving parameter.

In a feasible implementation, the apparatus further includes:

an output module, configured to output first prompt information, where the first prompt information is used to prompt a user whether to store a learning result of a driving parameter in the current trip, where
the obtaining module is further configured to receive a storage instruction entered by a user, where the storage instruction is used to instruct to store the learning result of the driving parameter in the current trip.

In a feasible implementation, the learning module is further configured to:
delete the learning result of the driving parameter in the current trip if a deletion instruction entered by the user is received.

In a feasible implementation, the learning module is specifically configured to:

compare the learning result with a preset threshold range; and
update the learning result based on the preset threshold range if the learning result is beyond the preset threshold range.

In a feasible implementation, the learning module is specifically configured to:

update the learning result to an upper limit value of the preset threshold range if the learning result is greater than the upper limit value of the preset threshold range; or
update the learning result to a lower limit value of the preset threshold range if the learning result is less than the lower limit value of the preset threshold range.

In a feasible implementation, the learning module is specifically configured to:

compare the learning result with a plurality of preset values;
determine a target preset value that is in the plurality of preset values and that has a smallest difference from the learning result; and
update the learning result to the target preset value.

In a feasible implementation, the output module is configured to:

output the learning result to a user interface.

In a feasible implementation,

the obtaining module is configured to identify a target user currently driving a vehicle;
correspondingly, the obtaining module is further configured to:

obtain driving data corresponding to the target user; and
the output module is configured to:
store a correspondence between the learning result and the target user, and output the correspondence to the user interface.

In a feasible implementation, the obtaining module is configured to:

obtain information about the target user; and
match the information about the target user with prestored user information, and determine a user corresponding to matched prestored user information as the target user.

In a feasible implementation, the output module is further configured to:
output second prompt information if there is no prestored user information that matches the information about the target user, where the second prompt information is used to prompt the user whether to create a user.

In a feasible implementation, the obtaining module is configured to:

receive an identity confirmation instruction entered by the user; and
determine the target user based on the identity confirmation instruction.

In a feasible implementation, the obtaining module is further configured to:

receive an instruction for creating a user that is entered by the user; and
obtain and store user information.

In a feasible implementation, the obtaining module is further configured to:
receive an activation instruction entered by the user, where the activation instruction is used to instruct to start self-learning of the autonomous driving system.

In a feasible implementation, the obtaining module is specifically configured to:
receive the activation instruction entered by the user through the user interface.

In a feasible implementation, the obtaining module is configured to:
receive the activation instruction entered by the user by using a physical button.

In a feasible implementation, the obtaining module is configured to:
receive a voice activation instruction entered by the user.

In a feasible implementation, the output module is further configured to send the learning result to a target device.

In a feasible implementation, the target device is a target vehicle, where

the obtaining module is configured to receive a data migration instruction, where the data migration instruction is used to instruct to migrate the learning result to the target vehicle; and
the output module is configured to: determine whether an autonomous driving system of the target vehicle is the same as an autonomous driving system of a current vehicle;
if the autonomous driving system of the target vehicle is the same as the autonomous driving system of the current vehicle, continue to determine whether a vehicle type of the target vehicle is the same as a vehicle type of the current vehicle; and
send the learning result to the target vehicle if the vehicle type of the target vehicle is the same as the vehicle type of the current vehicle.

In a feasible implementation, the output module is further configured to:
if the vehicle type of the target vehicle is different from the vehicle type of the current vehicle, perform parameter conversion on the learning result based on a system parameter that is in the target vehicle and that is related to autonomous driving performance, and send a converted learning result to the target vehicle.

In a feasible implementation, the output module is further configured to:
output prompt information if the autonomous driving system of the target vehicle is different from the autonomous driving system of the current vehicle, where the prompt information is used to prompt the user that migration of the learning result to the target vehicle is not supported.

According to a third aspect, this application provides an electronic device, including a memory and a processor, where the memory is connected to the processor, where

the memory is configured to store a computer program; and
the processor is configured to: when the computer program is executed, implement the method according to any one of the first aspect or the feasible implementations of the first aspect.

According to a fourth aspect, this application provides a computer-readable storage medium. The computer-readable storage medium stores a computer program, and when the computer program is executed by a processor, the method according to any one of the first aspect or the feasible implementations of the first aspect is implemented.

According to a fifth aspect, this application provides an autonomous driving vehicle, including the electronic device according to the third aspect.

This application provides a self-learning method and apparatus in an autonomous driving system, a device, and a storage medium. The driving data is obtained, and the abnormal data in the driving data is removed. The to-be-learned driving parameter is selected based on data obtained after the abnormal data is removed, and the to-be-processed data is calculated according to the calculation rule corresponding to the driving parameter, to obtain the learning result of the driving parameter. The learning result is used to indicate the autonomous driving system to set the driving parameter based on the learning result in the autonomous driving trip, so as to ensure that data obtained by the autonomous driving system through self-learning complies with an operational design domain of a vehicle, a traffic rule, a safety driving rule, and the like, so that an autonomous driving system parameter obtained through self-learning can meet a driving habit of a user, and also improve safety and user experience.

## BRIEF DESCRIPTION OF DRAWINGS

FIG. 1 is a schematic diagram of an application architecture of a self-learning method in an autonomous driving system according to this application;
FIG. 2 is a schematic flowchart 1 of a self-learning method in an autonomous driving system according to this application;
FIG. 3 is a schematic flowchart 2 of a self-learning method in an autonomous driving system according to this application;
FIG. 4 is a schematic diagram of first prompt information according to this application;
FIG. 5 is a schematic diagram of a learning progress according to this application;
FIG. 6 is a schematic diagram 1 of learning result optimization according to this application;
FIG. 7 is a schematic diagram 2 of learning result optimization according to this application;
FIG. 8 is a schematic diagram 1 of a learning result according to this application;
FIG. 9 is a schematic diagram 2 of a learning result according to this application;
FIG. 10 is a schematic flowchart 3 of a self-learning method in an autonomous driving system according to this application;
FIG. 11 is a schematic diagram of an activation instruction input interface according to this application;
FIG. 12 is a schematic diagram 1 of a user identity confirmation interface according to this application;
FIG. 13 is a schematic diagram 2 of a user identity confirmation interface according to this application;
FIG. 14 is a schematic diagram of a user identity switching interface according to this application;
FIG. 15 is a schematic flowchart of a learning result migration method according to this application;
FIG. 16 is a schematic diagram of a structure of a self-learning apparatus in an autonomous driving system according to this application; and
FIG. 17 is a schematic diagram of a structure of an electronic device according to this application.

## DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. It is clear that the described embodiments are merely a part rather than all of the embodiments of this application. All other embodiments obtained by a person of ordinary skill in the art based on the embodiments of this application without creative efforts shall fall within the protection scope of this application.

Terms used in the specification of this application are first described.

An advanced driver assistance system (Advanced Driver Assistance System, ADAS) is an active safety technology that uses various sensors installed on a vehicle to collect environmental data inside and outside the vehicle in the first time, and performs technology processing such as identification, detection, and tracking of static and dynamic objects, so that a driver is enabled to detect possible danger in the fastest time, so as to attract attention and improve safety.

An operational design domain (Operational Design Domain, ODD) is also referred to as an operational design domain or an operational design domain, and is a group of parameters, which refer to conditions and application scope that an autonomous driving system is designed to function. The operational design domain measures information such as a weather environment, road conditions (a radius of a straight road and a radius of curve road), speed, and a traffic flow, so as to ensure that a system capability is within a safe environment.

Override (Override) is a special takeover state in driver assistance or autonomous driving. When the system is activated, if a control request imposed by the driver by operating a throttle or steering wheel is greater than a system request, the system responds to an actual control state of the driver.

The following describes a vehicle architecture to which a self-learning method in an autonomous driving system provided in this application may be applied.

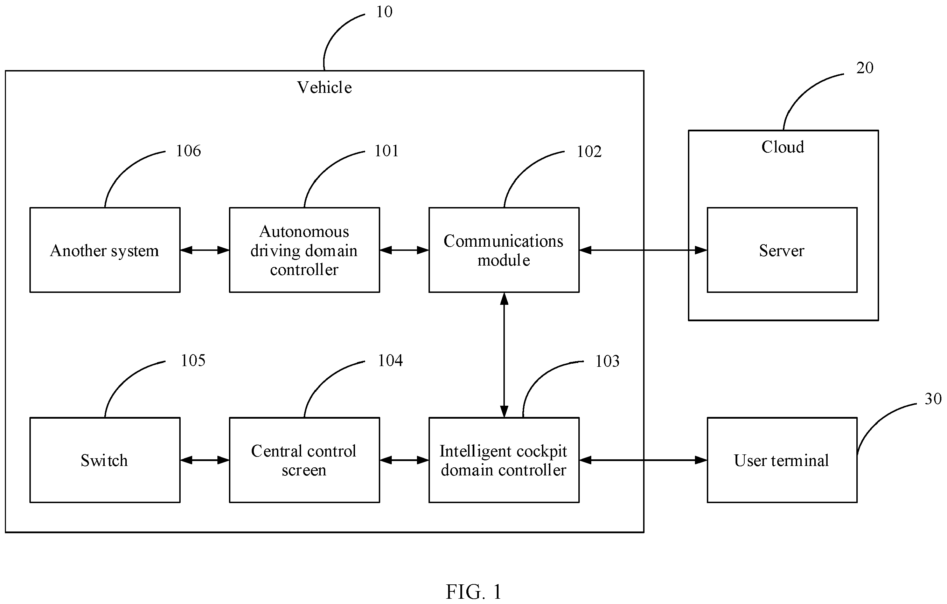

The self-learning method in an autonomous driving system provided in this application is applicable to a vehicle architecture in the conventional technology. For example, as shown in FIG. 1, according to a typical vehicle electronic architecture, a vehicle system includes three parts: a vehicle 10, a cloud 20, and a user terminal 30. The cloud 20 and the user terminal 30 may be selected and set based on a requirement of an actual application. The user terminal 30 may implement interconnection with the vehicle 10, and provide a human machine interface, so as to implement interaction between a user and the vehicle 10.

The vehicle 10 may include an autonomous driving domain controller 101, a communications module 102, an intelligent cockpit domain controller 103, a central control screen 104, a switch 105, and another system 106. The autonomous driving domain controller 101 is a control module that implements a function of a vehicle driving assistance system or the autonomous driving system. The communications module 102 is configured to implement communication between the vehicle 10 and the cloud 20 and communication between the vehicle 10 and the user terminal 30. The intelligent cockpit domain controller 103 is configured to control functions such as human-computer interaction and audio and video entertainment of the vehicle. The central control screen 104 is an interface for the human-computer interaction. The switch 105 may be a physical switch in the vehicle 10, for example, may be used to activate a self-learning function of the autonomous driving system.

In this application, a self-learning function of an advanced driver assistance system or the autonomous driving system is an independent function, and learning may be performed on the vehicle 10 or may be performed on the cloud 20. In other words, the self-learning method in the autonomous driving system provided in this application may be performed by the vehicle 10 or the cloud 20. For example, if learning is performed on the vehicle 10, the self-learning method may be performed by the autonomous driving domain controller 101 or the intelligent cockpit domain controller 103. Certainly, an independent user learning module may also be designed to implement the learning function. If learning is performed on the cloud 20, the self-learning method may be performed by a server on the cloud 20. It may be understood that, if the method is performed by the cloud, in actual application, some data necessary for learning needs to be uploaded to the server by using the communications module 102 based on consent of the user, so as to perform remote learning and training. After learning is completed, a learning result may be further delivered to the vehicle 10 by using an over the air (Over the Air, OTA) technology.

In the conventional technology, the advanced driver assistance system or the autonomous driving system provides a plurality of personalized settings that can be freely selected by the user, such as time headway in an adaptive cruise system, which usually provides a plurality of options for the user to select and set. The options are described as nearest, closer, medium, farther, and farthest, and the user can make corresponding personalized settings before use. However, for these personalized settings that can be selected by the user, the user usually cannot accurately learn which setting is suitable for a driving habit of the user when using the vehicle. Therefore, if a setting item selected by the user actually does not meet the driving habit of the user, user experience is still poor.

To enable the settings of the advanced driver assistance system or the autonomous driving system to meet the driving habit of the user, a self-learning function is added to an advanced driver assistance system or an autonomous driving system of some vehicles. To be specific, driving data of the user is automatically collected when the user manually drives the vehicle, and a parameter of the advanced driver assistance system or the autonomous driving system is set based on the driving data of the user. However, there are many problems in this method. For example, if a violation behavior or a dangerous driving behavior exists in a driving process of a driver, a parameter learned by the autonomous driving system is actually unreasonable. In addition, in terms of user experience, this method is completely automatically learned by the system in a background, and it is difficult for the user to perform manual intervention, and cannot allow the user to perform adjustment based on an actual driving behavior of the user.

Based on the foregoing problems, in the self-learning method in the autonomous driving system provided in this application, not only the driving data of the user is obtained in a driving process of the user, but also the driving data is sifted according to a specific rule, to remove data that does not meet a self-learning requirement. Therefore, parameter settings obtained by the autonomous driving system through self-learning are more appropriate. In addition, in this application, in a human-machine interaction manner, the user may participate in a self-learning process of the autonomous driving system, so that the user adjusts a self-learning status of the autonomous driving system based on an actual situation. In this way, a result better meets the driving habit of the user.

The following describes in detail the self-learning method in the autonomous driving system provided in this application with reference to specific embodiments. It may be understood that the following specific embodiments may be combined with each other, and a same or similar concept or process may not be described again in some embodiments.

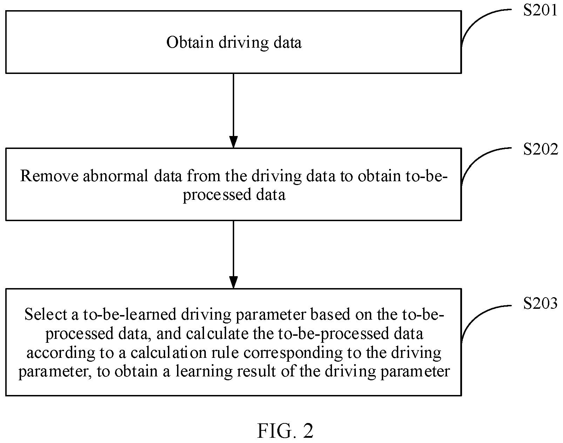

FIG. 2 is a schematic flowchart 1 of a self-learning method in an autonomous driving system according to this application. As shown in FIG. 2, the method in this embodiment includes the following steps.

S201: Obtain driving data.

The driving data obtained in this step may be driving data that is collected for a current trip in real time in a process of driving a vehicle by a user, or may be driving data collected in a historical trip, or may be driving data of a current trip and a historical trip. The driving data of the historical trip may be driving data of a plurality of historical trips. For example, the driving data may be collected and stored in each trip in which the user uses the vehicle. The driving data may include a traveling speed, an engine rotation speed, a distance between the vehicle and a front vehicle, throttle data, brake data, steering wheel data, a lamp status, a seat belt status, an airbag status, driving environment information, and the like. The driving environment information may include traffic light information, zebra crossing information, road section congestion information, information about a front vehicle, and the like of a passing road section. The driving environment information may be detected by using a forward-facing camera, a surround-view camera, or the like. It should be noted that the foregoing description of the driving data is merely an example. A specific data type that may be included in the driving data is not limited in this embodiment. In actual application, any related data in a driving process may be selected and obtained based on a requirement.

In addition, the driving data in this step may include manual driving data and/or autonomous driving takeover data. The manual driving data is driving data generated when the user does not use the autonomous driving system. The autonomous driving takeover data refers to driving data under override control, that is, driving data generated when the user takes over the autonomous driving system by operating a throttle or steering wheel in a process of using the autonomous driving system. Usually, the user performs override control in the autonomous driving process because control of the autonomous driving system cannot meet a driving requirement. Therefore, self-learning on the autonomous driving takeover data can make a learning result better meet a driving requirement and a driving habit of the user.

S202: Remove abnormal data from the driving data to obtain to-be-processed data.

In this step, the abnormal data may be driving data in a non-operational design domain, driving data in an abnormal driving scenario, driving data in an accident scenario, or the like. Because the abnormal data does not meet a safety driving requirement, a traffic rule, or the like, the abnormal data in the driving data needs to be further removed, so as to ensure that a system parameter obtained after self-learning by the autonomous driving system can ensure driving safety.

For example, the abnormal data in the driving data may be determined according to a preset rule, and the abnormal data is further deleted. The preset rule may continue to be set according to an operational design domain of the system, a traffic rule, a safety driving requirement, and the like.

For example, the driving data in the non-operational design domain is driving data in a non-system operating scenario. For example, an operating vehicle speed range of intelligent cruise assistance (Intelligent cruise assist, ICA) is 4 to 130 km/h. If the obtained driving data includes data beyond the vehicle speed range, the part of data beyond the vehicle speed range is removed.

The driving data in the abnormal driving scenario may be data that does not meet the traffic rule, for example, data in a dangerous driving scenario. For example, if the driving data includes that a green light turns yellow at an intersection at a moment, and further includes that a throttle pedal action is performed before the moment and a vehicle speed is increased, it may be determined that the user has a yellow light running behavior at the moment. Therefore, it may be determined that the acceleration process is not a normal acceleration process, and when an autonomous driving function is used to pass through the intersection, the system should ensure that no yellow light running behavior occurs. Therefore, driving data in the yellow light running scenario also needs to be removed.

For the accident scenario, occurrence of an accident may be determined by monitoring a sharp change of airbag pop-up or lateral and longitudinal deceleration. Because the driving data generated when the accident occurs does not meet a conventional driving requirement, data in the accident scenario also needs to be removed.

It may be understood that, if the driving data is the driving data that is of the current trip and that is collected in real time, the removing the abnormal data in the driving data in this step may be removing abnormal data in a period of time in real time after driving data of the period of time is obtained. Alternatively, the abnormal data of the current trip may be uniformly removed after the current trip ends. If the abnormal data is removed in real time, an amount of stored data can be reduced, and occupation of system storage space is reduced.

S203: Select a to-be-learned driving parameter based on the to-be-processed data, and calculate the to-be-processed data according to a calculation rule corresponding to the driving parameter, to obtain a learning result of the driving parameter. The learning result is used to indicate the autonomous driving system to set the driving parameter in an autonomous driving trip based on the learning result.

There are a plurality of driving parameters that need to be learned in the autonomous driving system, and driving parameters that can be learned in different trips are also different. For example, if there is another vehicle in front of the vehicle driven by the user in the current trip, time headway may be learned in the trip. If there is no other vehicle in front of the vehicle driven by the user in the current trip, it is clear that the time headway cannot be learned. For another example, if the current trip is always on a congested road section, a congestion-following distance may be learned in the trip. If the current trip is always on a smooth road section, it is clear that the congestion-following distance cannot be learned. Therefore, after the to-be-processed data is obtained, the to-be-learned driving parameter first needs to be selected based on the to-be-processed data, and then the to-be-processed data is further calculated according to the calculation rule corresponding to the driving parameter, to obtain the learning result of the driving parameter. For example, the to-be-processed data is calculated according to a calculation formula of the time headway, to obtain a calculation result of the time headway, that is, the learning result.

According to the self-learning method in an autonomous driving system provided in this embodiment, the driving data is obtained, and the abnormal data in the driving data is removed. The to-be-learned driving parameter is selected based on data obtained after the abnormal data is removed, and the to-be-processed data is calculated according to the calculation rule corresponding to the driving parameter, to obtain the learning result of the driving parameter, so as to ensure that data obtained by the autonomous driving system through self-learning complies with an operational design domain of the vehicle, a traffic rule, a safety driving rule, and the like, so that an autonomous driving system parameter obtained through self-learning can meet the driving habit of the user, and also improve safety and user experience.

It should be noted that, because a to-be-learned driving parameter in each trip may be different, if the driving data in S201 is the driving data of the current trip, that is, in each trip in which the user uses the vehicle, the driving data of the current trip may be collected and obtained in real time, and the driving data is processed according to the method in S202 and S203, to obtain the learning result of the to-be-learned driving parameter in each trip. Optionally, after each trip ends, the learning result of the driving parameter in the current trip and a learning result of a driving parameter in a historical trip before the current trip may be further processed to obtain a current overall learning result. For example, processing, for example, weighting processing, is performed on learning results of trips that have a same to-be-learned driving parameter, to obtain a learning result of the same to-be-learned driving parameters.

If the driving data in S201 is the driving data of the historical trip, or the driving data of the current trip and the driving data of the historical trip, abnormal data in the driving data of each trip may be separately removed in S202 and S203, to obtain to-be-processed data of each trip. Further, a to-be-learned driving parameter in each trip is selected based on the to-be-processed data of each trip, and the to-be-processed data of each trip is calculated according to a calculation rule corresponding to the to-be-learned driving parameter in each trip, to obtain a learning result of the to-be-learned driving parameter in each trip. Optionally, learning results of all trips may be further processed to obtain the current overall learning result. For example, processing, for example, weighting processing, is performed on the learning results of the trips that have a same to-be-learned driving parameter, to obtain the learning result of the same to-be-learned driving parameters.

In the following descriptions, the foregoing method is further described by using an example in which the driving data of the current trip is processed in each trip to obtain the learning result of the to-be-learned driving parameter in the current trip, and the learning result of the driving parameter in the current trip and the learning result of the driving parameter in the historical trip before the current trip are further processed to obtain the current overall learning result.

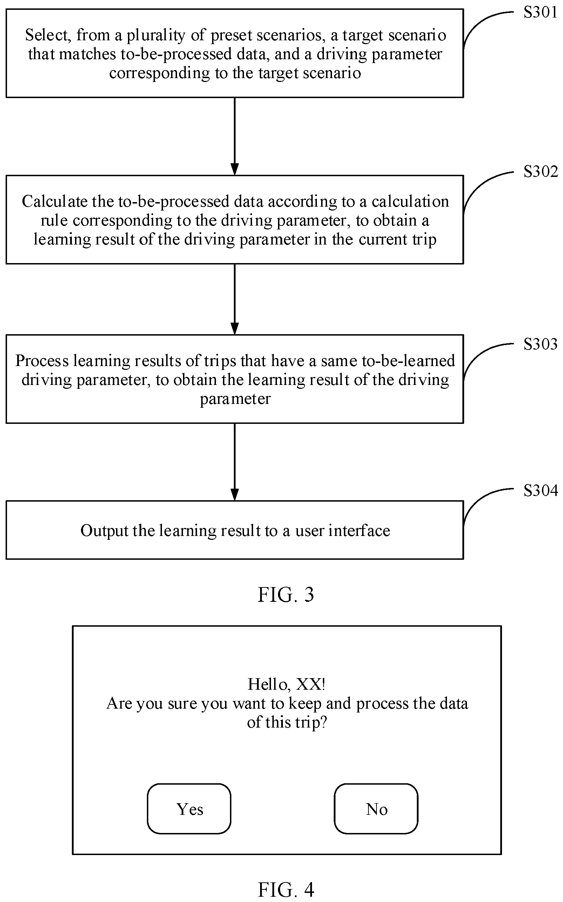

FIG. 3 is a schematic flowchart 2 of a self-learning method in an autonomous driving system according to this application. As shown in FIG. 3, the method includes the following steps.

S301: Select, from a plurality of preset scenarios, a target scenario that matches to-be-processed data, and a driving parameter corresponding to the target scenario.

Each preset scenario corresponds to at least one driving parameter.

The to-be-processed data in this step may be to-be-processed data obtained after abnormal data is sifted out from driving data of a current trip. The preset scenario may be various driving scenarios that may occur when the vehicle is driven, for example, a stable vehicle-following scenario or a congested road-following scenario. A driving parameter corresponding to the stable vehicle-following scenario is time headway. A driving parameter corresponding to the congested road-following scenario is a congestion-following distance. The preset scenario and a driving parameter corresponding to each scenario may be set based on an actual requirement. It is clear that driving parameters that are of the autonomous driving system and that can be learned in different scenarios are different. Therefore, a scenario that meets a trip needs to be first determined based on to-be-processed data of each trip, so as to further determine a to-be-learned driving parameter in the trip. For example, a driving data feature of the to-be-processed data is calculated, and the driving data feature of the to-be-processed data is compared with a driving data feature of each of the plurality of preset scenarios, to obtain the target scenario that is in the plurality of preset scenarios and that matches the to-be-processed data.

For example, a preset driving data feature of the stable vehicle-following scenario is that there needs to be a target vehicle in front of a current vehicle, a vehicle speed difference between the two vehicles is less than a preset difference, and a change rate of time headway between the two vehicles is stable at a preset proportion and lasts for at least preset duration. The preset difference, the preset proportion, and the preset duration may be set based on an actual situation. If the to-be-processed data meets the foregoing driving data feature, it may be determined that the to-be-processed data meets the stable vehicle-following scenario. Therefore, the driving parameter time headway corresponding to the stable vehicle-following scenario is the to-be-learned driving parameter.

It should be noted that there may be one or more target scenarios matching each trip. If there are a plurality of target scenarios, driving parameters corresponding to the plurality of target scenarios are to-be-learned driving parameters.

S302: Calculate the to-be-processed data according to a calculation rule corresponding to the driving parameter, to obtain a learning result of the driving parameter in the current trip.

The to-be-processed data includes normal driving data of the current trip, and calculation processing is performed on the to-be-processed data according to a definition of the to-be-learned driving parameter and the calculation rule, to obtain the learning result of the driving parameter in the current trip.

The following uses the driving parameter as the time headway as an example for description, and the time headway is defined as follows:

$$THW = Distance/Speed \hspace{4cm} \text{Formula (1)}$$

Herein, THW indicates the time headway, the distance indicates a distance between two vehicles, and the speed indicates a vehicle speed of the current vehicle.

To simplify a self-learning process, several speed points within an operating vehicle speed range of adaptive cruise control (Adaptive Cruise Control, ACC) may be selected for self-learning. For example, an operating vehicle speed of the ACC is 0 to 130 km/h, 13 calibrated vehicle speed points such as 10 km/h, 20 km/h, ..., and 130 km/h are selected, and other vehicle speeds are determined through linear interpolation. Total duration of the vehicle-following scenario at each vehicle speed point in the current trip is determined, and average time headway at each vehicle speed point in the current trip is calculated. It should be noted that, when the total duration of the vehicle-following scenario at each vehicle speed point is determined, because the vehicle speed varies up and down, the total duration of each vehicle speed point is a time in which the vehicle speed falls within a preset range including the vehicle speed point. Based on an average distance between the two vehicles at each vehicle speed point and an average vehicle speed of the current vehicle, the average time headway at each vehicle speed point in the current trip may be determined.

In addition, after the current trip ends, first prompt information may be further output. The first prompt information is used to prompt a user whether to store the learning result of the driving parameter in the current trip.

Because there may be a lot of uncertainties in a trip of the vehicle driven by the user, for example, a driving speed of the user in a current trip is continuously high due to an emergency event, however, the user usually drives slowly in daily life, and therefore, driving data of this trip does not meet a daily driving habit of the user. In this case, the user may need to delete a current learning result, to prevent the autonomous driving system from learning data that does not meet the driving habit of the user. Therefore, after the trip ends, the user may be prompted by using the first prompt information. For example, as shown in FIG. 4, if an instruction that is entered by the user and that is used to instruct to store the learning result is received, further processing may continue to be performed on the learning result stored in the current trip and a learning result of a historical trip. That is, S303 is performed. The learning result of the driving parameter in the current trip is deleted if a deletion instruction entered by the user is received.

S303: Process learning results of trips that have a same to-be-learned driving parameter, to obtain the learning result of the driving parameter.

Self-learning of the autonomous driving system requires long-term learning of a plurality of trips to obtain a better learning result. Therefore, data of the current trip and data of the historical trip need to be combined to determine the learning result of the driving parameter. It may be understood that, in each trip, the driving data of the current trip may be processed to obtain the learning result of the to-be-learned driving parameter in the current trip. Therefore, after each trip ends, comprehensive processing may be further performed on a learning result of a trip that is in the historical trip and that has a same to-be-learned driving parameter as the current trip, to obtain the learning result of the driving parameter.

An example in which the to-be-learned driving parameter is the time headway is still used for description. The learning result of the time headway is determined by using the following formula:

$$\text{THW}_a = \sum_{i=1}^{n} (t_i \times THW_i)/ \sum_{i=1}^{n} t_i \qquad\qquad \text{Formula (2)}$$

Herein, $\text{THW}_a$ is time headway at a vehicle speed point a, $t_i$ is an occurrence time of a scenario corresponding to a to-be-learned driving parameter in an $i^{th}$ trip or ignition cycle, n is a total quantity of trips, and $THW_i$ is average time headway at the vehicle speed point a in the $i^{th}$ trip. According to this method, time headway of each vehicle speed point is calculated, and a time headway learning curve in an entire vehicle speed range can be obtained through linear interpolation.

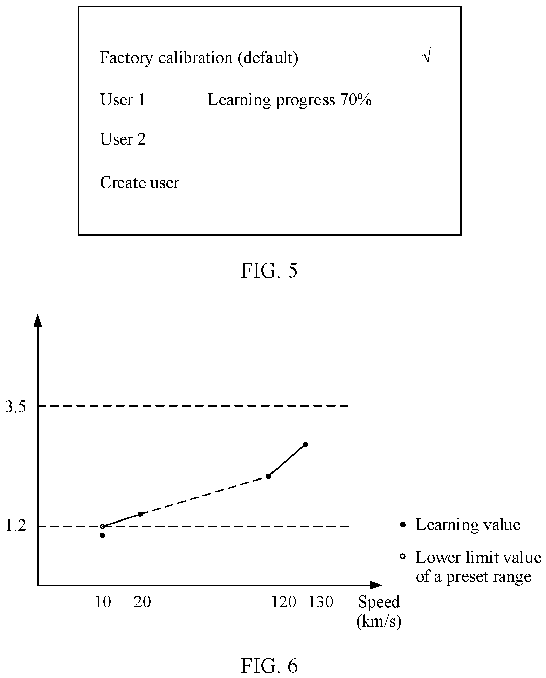

It should be noted that the learning result that is of the to-be-learned driving parameter and that is determined based on the trips that have the same to-be-learned driving parameter is a current learning result. If total duration or a total mileage of the trips that have the same to-be-learned driving parameter is relatively short until the current trip, the autonomous driving system further needs to continue to perform self-learning in a subsequent trip. If the total duration of the trips that have the same to-be-learned driving parameter reaches preset duration, or the total mileage of the trips that have the same to-be-learned driving parameter reaches preset mileage, the current learning result may be determined as the learning result of the driving parameter. Correspondingly, a current learning progress of the driving parameter may be calculated based on a ratio of the total duration of the trips that have the same to-be-learned driving parameter to the preset duration, or based on a ratio of the total duration of the trips that have the same to-be-learned driving parameter to the preset mileage. For example, as shown in FIG. 5.

To further ensure safety of the autonomous driving system, the learning result may be further compared with a value that is preset by the system and that is within a safety range, and the learning result is updated based on a comparison result.

In a feasible implementation, the learning result is compared with a preset threshold range. If the learning result is beyond the preset threshold range, the learning result is updated based on the preset threshold range.

For example, if the learning result is greater than an upper limit value of the preset threshold range, the learning result is updated to the upper limit value of the preset threshold range. If the learning result is less than a lower limit value of the preset threshold range, the learning result is updated to the lower limit value of the preset threshold range.

An example in which the to-be-learned driving parameter is the time headway is used for description. If a preset safety range of the time headway is 1.2s to 3.5s, and time headway at a vehicle speed point determined in the foregoing learning result is less than 1.2s, for example, as shown in FIG. 6, 1.2s is determined as a learning result of the time headway at the vehicle speed point. Correspondingly, if time headway at a vehicle speed point determined in the foregoing learning result is greater than 3.5s, 3.5s is determined as a learning result of the time headway at the vehicle speed point.

In another feasible implementation, the learning result is compared with a plurality of preset values, a target preset value that is of the plurality of preset values and that has a smallest difference from the learning result is determined, and the learning result is updated to the target preset value.

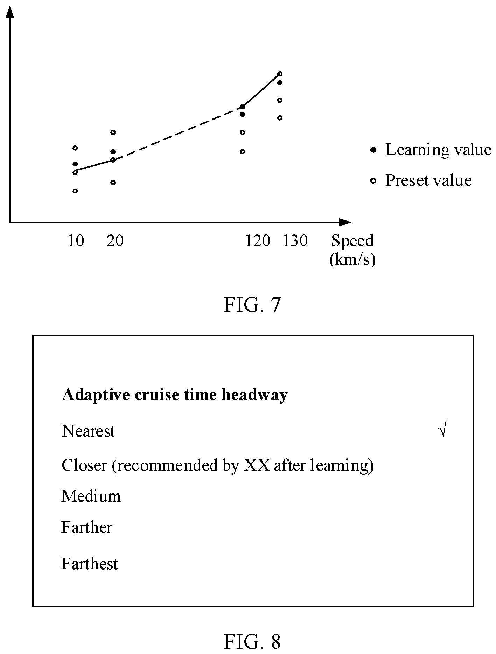

An example in which the to-be-learned driving parameter is the time headway is still used for description. For example, as shown in FIG. 7, three groups of preset values are preset for a vehicle before delivery, respectively corresponding to "conservative", "moderate", and "radical" driving styles. The learning result is matched with the preset values, and a closest preset value at each vehicle speed point is selected as the final learning result. Matching is performed based on the learning result of the user, and a closest group of parameters is selected as the learning result.

S304: Output the learning result to a user interface.

After the self-learning of the autonomous driving system is performed, a self-learning result may be displayed on the user interface, so that the user may choose to use the self-learning result or use a default parameter of the system in an autonomous driving process. In addition, the user may further perform a view operation, a delete operation, and the like on the learning result. In addition, for a completed learning result, the user may further choose to re-learn or continue learning, so that the learning result may continue to be updated based on obtained driving data.

For example, as shown in FIG. 8, when the learning result is output, only related personalized settings open to the user may be changed. For example, a recommended setting item determined based on the learning result is displayed on a personalized setting page, or a personalized setting item is set to the learning result selected by the user based on a selection of the user.

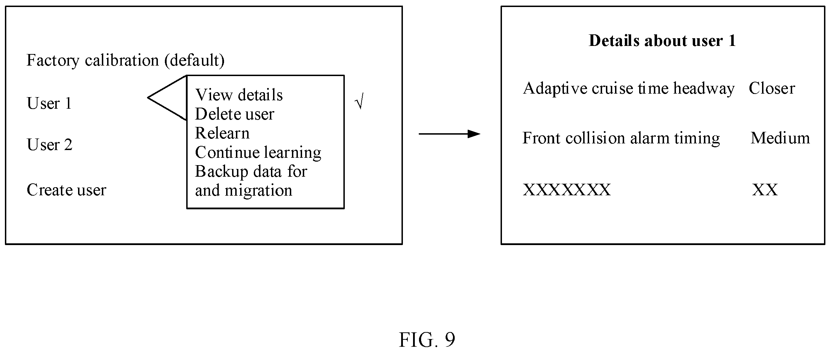

In addition, a system performance-related parameter may be further changed by using the learning result. For example, as shown in FIG. 9, the system performance-related parameter and personalized settings are displayed in the user interface in a form of a summary report or an overview or placed in a submenu for viewing by the user.

The user can select between the self-learning result and a default system parameter. In addition, the autonomous driving system can automatically set the parameters based on a user identification result after each departure. If a user identity is not identified, the user does not perform user confirmation, or the confirmation times out, the system uses the default system parameter.

According to the self-learning method in an autonomous driving system provided in this embodiment, scenario screening is performed by using a preset scenario, and scenario characteristics corresponding to different trips are quickly identified, thereby improving self-learning efficiency and accuracy. In addition, it is determined, based on selection of the user, whether to include data of a current trip into a learning category, so that the learning result better meets the driving habit of the user.

The processes of obtaining the driving data and performing screening processing on the driving data that are described by using examples in the foregoing implementation are self-learning processes performed after a self-learning function is enabled. It may be understood that the user may alternatively choose not to enable the self-learning function of the autonomous driving system, but always use the system default parameter. In addition, when performing the self-learning, the autonomous driving system may further separately perform corresponding self-learning based on different users, so that each user may select an autonomous driving parameter that meets a driving habit of the user when using the autonomous driving function. The following provides description with reference to specific embodiments.

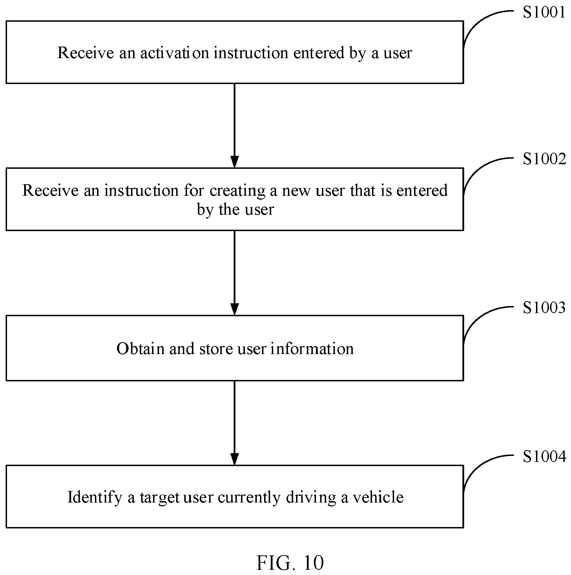

FIG. 10 is a schematic flowchart 3 of a self-learning method in an autonomous driving system according to this application. As shown in FIG. 10, the method includes the following steps.

S1001: Receive an activation instruction entered by a user, where the activation instruction is used to instruct to start self-learning of the autonomous driving system.

In this embodiment, a self-learning function of the autonomous driving system is used as an independent function, and the user may select whether to enable the self-learning function of the autonomous driving system. If the user selects to enable the self-learning function of the autonomous driving system, in a subsequent trip, a vehicle controller or a cloud server obtains driving data in a driving trip to perform self-learning of the autonomous driving system until a preset self-learning completion condition is met. If the user does not select to enable the self-learning function of the autonomous driving system, a system default parameter is always used during an autonomous driving process.

A manner in which the user enters the activation instruction may be set based on a function actually provided by a vehicle. The user may enter the activation instruction by using a user interface, for example, by using a central control screen of the vehicle, or the user may alternatively activate the function by using a vehicle APP. For example, the user may further enter the activation instruction by using a physical button. Alternatively, in a vehicle that supports speech recognition, the user may alternatively activate the self-learning function by using a voice activation instruction.

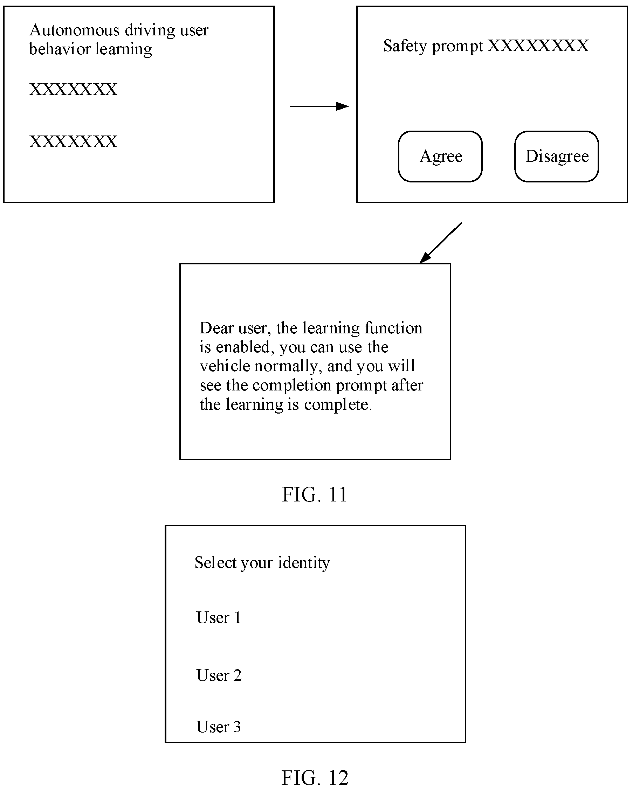

For example, as shown in FIG. 11, the user enters an autonomous driving user behavior learning menu by using a menu on the central control screen, and selects, based on a menu option and a prompt, to start the learning function.

S 1002: Receive an instruction for creating a user that is entered by the user.

After activating the learning function, the user needs to create user information for user identification and user confirmation in subsequent use. Similarly, the user may enter, through the user interface, the instruction for creating a user, a voice instruction, or the like.

S1003: Obtain and store the user information.

The user information may include but is not limited to a user-defined user name, a user gender, a user image, and the like. To increase interaction between the system and the user and improve accuracy of the user identification, the system may also cooperate with an identification system of the vehicle, for example, record face, fingerprint, or iris information by using a biometric recognition technology. Alternatively, a mobile APP can invoke a face or fingerprint recognition system of a mobile terminal to record the user information. Alternatively, a personalized key function is used to record different users corresponding to different keys. This is not specifically limited in this embodiment.

S1004: Identify a target user currently driving the vehicle.

After the user activates the self-learning function, the system needs to confirm a user identity to obtain information about the target user each time the user starts the vehicle.

In a feasible implementation, the information about the target user is obtained, the information about the target user is matched with prestored user information, and a user corresponding to matched prestored user information is determined as the target user.

If the learning function of the autonomous driving system is associated with a vehicle identification system, the information about the target user, such as information such as a face, a fingerprint, or an iris, may be obtained by using the vehicle identification system, and the obtained information about the target user is matched with the prestored user information, to determine the target user. It may be understood that if there is no prestored user information that matches the information about the target user, second prompt information may be output, and the second prompt information is used to prompt the user whether to create a user. If the user selects to create a user, the to-be-created user may be created according to the method in S502 and S503.

In another feasible implementation, an identity confirmation instruction entered by the user is received, and the target user is determined based on the identity confirmation instruction.

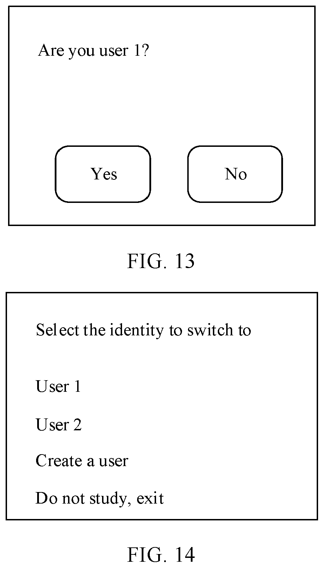

If the learning function of the autonomous driving system is not associated with the vehicle identification system or the vehicle has no system related to an identification function, the user may be directly prompted to perform identity confirmation or selection in a voice or text prompt manner. For example, as shown in FIG. 12 or FIG. 13.

After determining that an identity of the target user is confirmed, the method in the embodiments shown in FIG.

2 and FIG. 3 may be continued to be performed. Correspondingly, when the driving data is obtained, driving data corresponding to the target user is obtained. After learning is completed, a correspondence between a learning result and the target user may be stored, and the correspondence is output to the user interface.

If the driver is changed temporarily during driving, the vehicle identification system may also actively detect the driver change and automatically switch the user, or the user may select to switch the user through voice or manual access function menu. If the new driver has not established user information in the system, the user may further choose to create a user or temporarily exit learning, as shown in FIG. 14.

In the method in this embodiment of this application, the self-learning function of the autonomous driving system is used as an independent function. The user may choose whether to enable the self-learning function, and perform targeted learning based on different users, so that the learning result meets a driving habit of each user, thereby improving user experience.

In this application, in addition to being applied to a self-driving vehicle, the learning result obtained by performing self-learning by the autonomous driving system may further be backed up and migrated. For example, the learning result is sent to the target device, and the target device may be a user terminal or a cloud server, so as to back up the learning result to a mobile phone terminal or a cloud account.

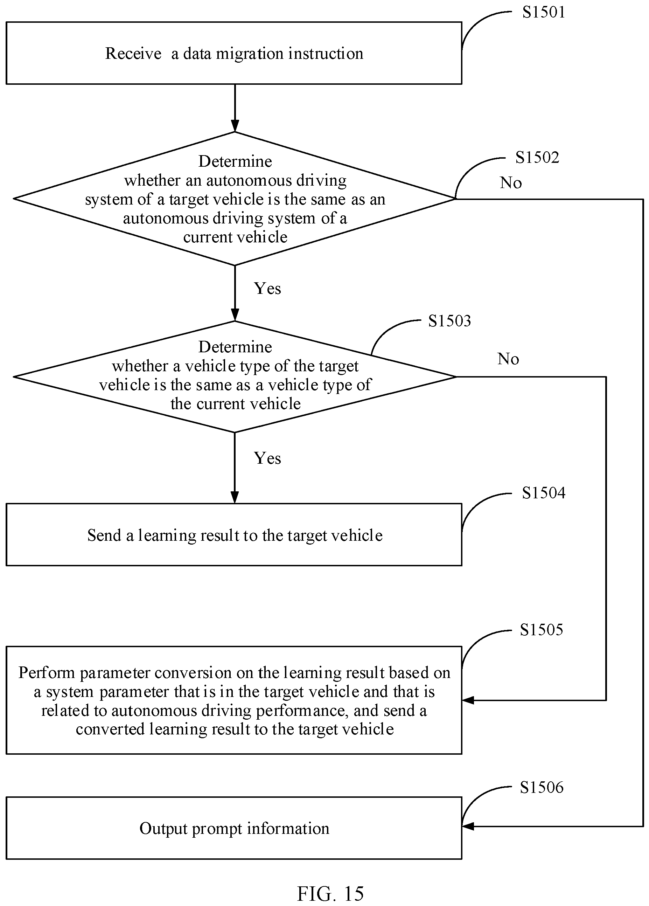

In addition, the target device may alternatively be another target vehicle. When the user replaces a vehicle of a same type or a vehicle of a same driving assistance or autonomous driving platform, the user may further migrate the learning result and directly use the learning result. FIG. 15 is a schematic flowchart of a learning result migration method according to this application. As shown in FIG. 15, the method includes the following steps.

S1501: Receive a data migration instruction, where the data migration instruction is used to instruct to migrate a learning result to a target vehicle.

S1402: Determine whether an autonomous driving system of the target vehicle is the same as an autonomous driving system of a current vehicle; if the autonomous driving system of the target vehicle is the same as the autonomous driving system of the current vehicle, perform S1503; and if the autonomous driving system of the target vehicle is different from the autonomous driving system of the current vehicle, perform S1506.

S1503: Determine whether a vehicle type of the target vehicle is the same as a vehicle type of the current vehicle; if the vehicle type of the target vehicle is the same as the vehicle type of the current vehicle, perform S 1504; and if the vehicle type of the target vehicle is different from the vehicle type of the current vehicle, perform S 1505.

S 1504: Send the learning result to the target vehicle.

S1505: Perform parameter conversion on the learning result based on a system parameter that is in the target vehicle and that is related to autonomous driving performance, and send a converted learning result to the target vehicle.

S1406: Output prompt information, where the prompt information is used to prompt the user that migration of the learning result to the target vehicle is not supported.

The data migration instruction may be entered by the user by using a human machine interface, a voice instruction, a mobile phone APP, or the like. If the autonomous driving system of the target vehicle is the same as the autonomous driving system of the current vehicle, it indicates that the learning result can be migrated. If the autonomous driving system of the target vehicle is different from the autonomous driving system of the current vehicle, the learning result cannot be migrated to the target vehicle.

When the autonomous driving system of the target vehicle is the same as the autonomous driving system of the current vehicle, if a vehicle type configuration of the target vehicle is the same as a vehicle type configuration of the current vehicle, the learning result of the current vehicle may be directly sent to a controller of the target vehicle. If the vehicle type configuration of the target vehicle is different from the vehicle type configuration of the current vehicle, it needs to be checked whether a driver assistance or autonomous driving-related system of the target vehicle is the same as a driver assistance or autonomous driving-related system of the current vehicle, for example, a system related to intelligent driving system performance such as power, braking, and steering, and then necessary parameter conversion is performed based on a detection result, to generate a new learning result and deliver to the target vehicle.

In the method in this embodiment, the self-learning result of the autonomous driving system is backed up and migrated, so that repeated learning of vehicles on a same platform or vehicles of a same vehicle type is avoided, and one-time learning and a plurality of times of use is implemented, so as to improve user experience.

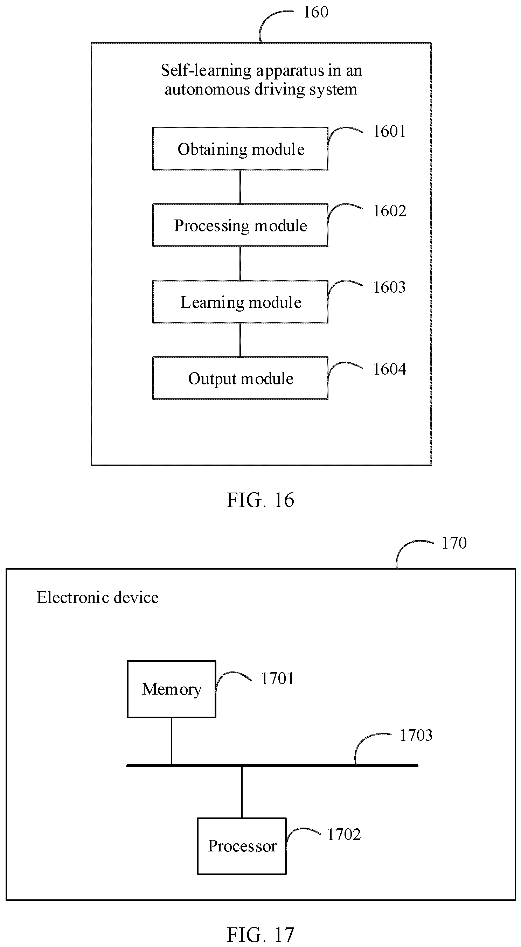

FIG. 16 is a schematic diagram of a structure of a self-learning apparatus in an autonomous driving system according to this application. As shown in FIG. 16, a self-learning apparatus 160 for the autonomous driving system includes:

an obtaining module 1601, configured to obtain driving data;
a processing module 1602, configured to remove abnormal data from the driving data to obtain to-be-processed data; and
a learning module 1603, configured to select a to-be-learned driving parameter based on the to-be-processed data, and calculate the to-be-processed data according to a calculation rule corresponding to the driving parameter, to obtain a learning result of the driving parameter, where the learning result is used to indicate the autonomous driving system to set the driving parameter in an autonomous driving trip based on the learning result.

Optionally, the driving data includes manual driving data and/or autonomous driving takeover data.

Optionally, the processing module 1602 is configured to:

determine the abnormal data in the driving data according to a preset rule; and
delete the abnormal data.

Optionally, the learning module 1603 is configured to:
select, from a plurality of preset scenarios, a target scenario that matches the to-be-processed data, and the driving parameter corresponding to the target scenario, where each preset scenario corresponds to at least one driving parameter.

Optionally, the learning module 1603 is specifically configured to:
calculate a driving data feature of the to-be-processed data, and compare the driving data feature of the to-be-processed data with a driving data feature of each of the plurality of preset scenarios, to obtain the target scenario that is in the plurality of preset scenarios and that matches the to-be-processed data.

Optionally, the driving data includes driving data of a current trip and/or driving data of a historical trip.

The processing module 1602 is configured to remove abnormal data from driving data of each of the current trip and/or the historical trip, to obtain to-be-processed data of each trip.

The learning module 1603 is configured to: select a to-be-learned driving parameter in each trip based on the to-be-processed data of each trip, and calculate the to-be-processed data of each trip according to a calculation rule corresponding to the to-be-learned driving parameter in each trip, to obtain a learning result of the to-be-learned driving parameter in each trip; and process learning results of trips that have a same to-be-learned driving parameter, to obtain the learning result of the driving parameter.

Optionally, the learning module 1603 is configured to:
perform weighting processing on the learning results of the plurality of trips that have the same to-be-learned driving parameter, to obtain the learning result of the driving parameter.

Optionally, the learning module 1603 is configured to:

process the learning results of the plurality of trips that have the same to-be-learned driving parameter, to obtain a current learning result of the driving parameter; and
determine the current learning result as the learning result of the driving parameter if total duration of the trips that have the same to-be-learned driving parameter reaches preset duration, or a total mileage of the trips that have the same to-be-learned driving parameter reaches a preset mileage.

Optionally, the learning module 1603 is further configured to:
calculate a current learning progress of the driving parameter based on the preset duration and the total duration of the trips that have the same to-be-learned driving parameter, or based on the preset mileage and the total mileage of the trips that have the same to-be-learned driving parameter.

Optionally, the self-learning apparatus 160 of the autonomous driving system further includes an output module 1604, configured to output first prompt information, where the first prompt information is used to prompt a user whether to store a learning result of a driving parameter in the current trip.

The obtaining module 1601 is configured to receive a storage instruction entered by a user, where the storage instruction is used to instruct to store the learning result of the driving parameter in the current trip.

Optionally, the learning module 1603 is further configured to:

The learning result of the driving parameter in the current trip is deleted if a deletion instruction entered by the user is received.

Optionally, the learning module 1603 is specifically configured to:

compare the learning result with a preset threshold range; and
update the learning result based on the preset threshold range if the learning result is beyond the preset threshold range.

Optionally, the learning module 1603 is specifically configured to:

update the learning result to an upper limit value of the preset threshold range if the learning result is greater than the upper limit value of the preset threshold range; or

update the learning result to a lower limit value of the preset threshold range if the learning result is less than the lower limit value of the preset threshold range.

Optionally, the learning module 1603 is specifically configured to:

compare the learning result with a plurality of preset values;
determine a target preset value that is in the plurality of preset values and that has a smallest difference from the learning result; and
update the learning result to the target preset value.

Optionally, the output module 1604 is configured to:
output the learning result to a user interface.
Optionally, the obtaining module 1601 is configured to identify a target user currently driving a vehicle.
Correspondingly, the obtaining module 1601 is further configured to:
obtain driving data corresponding to the target user; and
The output module 1604 is configured to:
store a correspondence between the learning result and the target user, and output the correspondence to the user interface.
Optionally, the obtaining module 1601 is configured to:

obtain information about the target user; and
match the information about the target user with prestored user information, and determine a user corresponding to matched prestored user information as the target user.

Optionally, the output module 1604 is further configured to:
output second prompt information if there is no prestored user information that matches the information about the target user, where the second prompt information is used to prompt the user whether to create a user.
Optionally, the obtaining module 1601 is configured to:

receive an identity confirmation instruction entered by the user; and
determine the target user based on the identity confirmation instruction.

Optionally, the obtaining module 1601 is further configured to:

receive an instruction for creating a user that is entered by the user; and
obtain and store user information.

Optionally, the obtaining module 1601 is further configured to:
receive an activation instruction entered by the user, where the activation instruction is used to instruct to start self-learning of the autonomous driving system.
Optionally, the obtaining module 1601 is specifically configured to:
receive the activation instruction entered by the user through the user interface.
Optionally, the obtaining module 1601 is configured to:
receive the activation instruction entered by the user by using a physical button.
Optionally, the obtaining module 1601 is configured to:
receive a voice activation instruction entered by the user.
Optionally, the output module 1604 is configured to send the learning result to the target device.
Optionally, the target device is a target vehicle.
The obtaining module 1601 is configured to receive a data migration instruction, where the data migration instruction is used to instruct to migrate the learning result to the target vehicle.
The output module 1604 is configured to: determine whether an autonomous driving system of the target vehicle is the same as an autonomous driving system of a current vehicle;

if the autonomous driving system of the target vehicle is the same as the autonomous driving system of the current vehicle, continue to determine whether a vehicle type of the target vehicle is the same as a vehicle type of the current vehicle; and
send the learning result to the target vehicle if the vehicle type of the target vehicle is the same as the vehicle type of the current vehicle.

Optionally, the output module 1604 is further configured to:
if the vehicle type of the target vehicle is different from the vehicle type of the current vehicle, perform parameter conversion on the learning result based on a system parameter that is in the target vehicle and that is related to autonomous driving performance, and send a converted learning result to the target vehicle.

Optionally, the output module 1604 is further configured to:
output prompt information if the autonomous driving system of the target vehicle is different from the autonomous driving system of the current vehicle, where the prompt information is used to prompt the user that migration of the learning result to the target vehicle is not supported.

The self-learning apparatus in the autonomous driving system provided in this application may be configured to perform the self-learning method in the autonomous driving system in any one of the foregoing method embodiments. Implementation principles and technical effects of the self-learning apparatus are similar, and details are not described herein again.

FIG. 17 is a schematic diagram of a structure of an electronic device according to this application. As shown in FIG. 17, an electronic device 170 includes a memory 1701 and a processor 1702. Optionally, the memory 1701 and the processor 1702 are connected through the bus 1703.

The memory 1701 is configured to store a computer program.

The processor 1702 is configured to: when a computer program is executed, implement the method according to any one of the first aspect or the feasible implementations of the first aspect.

This application provides a computer-readable storage medium. The computer-readable storage medium stores a computer program. When the computer program is executed by a processor, the self-learning method in the autonomous driving system in any one of the foregoing method embodiments is implemented.

This application provides an autonomous driving vehicle, including the electronic device shown in FIG. 17.

Optionally, the processor may be a central processing unit (Central Processing Unit, CPU), or may be another general purpose processor, a digital signal processor (Digital Signal Processor, DSP), an application-specific integrated circuit (Application-Specific Integrated Circuit, ASIC), or the like. The general-purpose processor may be a microprocessor, or the processor may be any conventional processor or the like. Steps of the method embodiments disclosed with reference to this application may be directly implemented by a hardware processor, or may be implemented by a combination of hardware and a software module in a processor.

This application provides a computer-readable storage medium. The computer-readable storage medium stores a computer program. When the computer program is executed by a processor, the method in the foregoing method embodiments is implemented.

All or some of the steps in the method embodiments may be implemented by hardware related to program instructions. The foregoing program may be stored in a readable memory. When the program is executed, the steps of the foregoing method embodiment are performed. The foregoing memory (storage medium) includes a read-only memory (read-only memory, ROM), a RAM, a flash memory, a hard disk, a solid state drive, a magnetic tape (magnetic tape), a floppy disk (floppy disk), a compact disc (optical disc), and any combination thereof.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processing unit of another programmable data processing device to generate a machine, so that instructions executed by the computer or the processing unit of the another programmable data processing device generate an apparatus in implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to the embodiments of this application without departing from the spirit and scope of this application. This application is intended to cover these modifications and variations of the embodiments of this application provided that they fall within the scope of protection defined by the following claims and their equivalent technologies.

In this application, the term "include" and variations thereof may refer to non-limiting inclusion; and the term "or" and variations thereof may refer to "and/or". In this application, the terms "first", "second", and the like are intended to distinguish between similar objects but do not necessarily indicate a specific order or sequence. In this application, "a plurality of" means two or more than two. The term "and/or" describes an association relationship for describing associated objects and represents that three relationships may exist. For example, A and/or B may represent the following three cases: Only A exists, both A and B exist, and only B exists. The character "/" usually indicates an "or" relationship between associated objects.

The foregoing descriptions are merely specific implementations of the present invention, but are not intended to limit the protection scope of the present invention. Any variation or replacement readily figured out by the person skilled in the art within the technical scope disclosed in the present invention shall fall within the protection scope of the present invention. Therefore, the protection scope of the present invention shall be subject to the protection scope of the claims.

**Claims**

1. A self-learning method in an autonomous driving system, comprising:

   obtaining driving data;
   removing abnormal data from the driving data to obtain to-be-processed data; and
   selecting a to-be-learned driving parameter based on the to-be-processed data, and calculating the to-be-processed data according to a calculation rule corresponding to the driving parameter, to obtain a learning result of the driving parameter, wherein the learning result is used to indicate the autonomous driving system to set the driving parameter in an autonomous driving trip based on the learning result.

2. The method according to claim 1, wherein the driving data comprises manual driving data and/or autonomous driving takeover data.

3. The method according to claim 1, wherein the removing abnormal data from the driving data comprises:

   sifting the abnormal data in the driving data according to a preset rule; and
   deleting the abnormal data.

4. The method according to claim 1, wherein the selecting a to-be-learned driving parameter based on the to-be-processed data comprises:
   selecting, from a plurality of preset scenarios, a target scenario that matches the to-be-processed data, and the driving parameter corresponding to the target scenario, wherein each preset scenario corresponds to at least one driving parameter.

5. The method according to claim 4, wherein the selecting, from a plurality of preset scenarios, a target scenario that matches the to-be-processed data comprises:
   calculating a driving data feature of the to-be-processed data, and comparing the driving data feature of the to-be-processed data with a driving data feature of each of the plurality of preset scenarios, to obtain the target scenario that is in the plurality of preset scenarios and that matches the to-be-processed data.

6. The method according to any one of claims 1 to 5, wherein the driving data comprises driving data of a current trip and/or driving data of a historical trip;
   the removing abnormal data from the driving data to obtain to-be-processed data comprises:

   removing abnormal data from driving data of each of the current trip and/or the historical trip, to obtain to-be-processed data of each trip; and
   the selecting a to-be-learned driving parameter based on the to-be-processed data, and calculating the to-be-processed data according to a calculation rule corresponding to the driving parameter, to obtain a learning result of the driving parameter comprises:

      selecting a to-be-learned driving parameter in each trip based on the to-be-processed data of each trip, and calculating the to-be-processed data of each trip according to a calculation rule corresponding to the to-be-learned driving parameter in each trip, to obtain a learning result of the to-be-learned driving parameter in each trip; and

processing learning results of trips that have a same to-be-learned driving parameter, to obtain the learning result of the driving parameter.

7. The method according to claim 6, wherein the processing learning results of trips that have a same to-be-learned driving parameter, to obtain the learning result of the driving parameter comprises:
performing weighting processing on the learning results of the plurality of trips that have the same to-be-learned driving parameter, to obtain the learning result of the driving parameter.

8. The method according to claim 6, wherein the processing learning results of trips that have a same to-be-learned driving parameter, to obtain the learning result of the driving parameter comprises:

processing the learning results of the plurality of trips that have the same to-be-learned driving parameter, to obtain a current learning result of the driving parameter; and
determining the current learning result as the learning result of the driving parameter if total duration of the trips that have the same to-be-learned driving parameter reaches preset duration, or a total mileage of the trips that have the same to-be-learned driving parameter reaches a preset mileage.

9. The method according to claim 8, wherein the method further comprises:
calculating a current learning progress of the driving parameter based on the preset duration and the total duration of the trips that have the same to-be-learned driving parameter, or based on the preset mileage and the total mileage of the trips that have the same to-be-learned driving parameter.

10. The method according to claim 1, wherein when the driving data comprises driving data of a current trip, the method further comprises:

outputting first prompt information, wherein the first prompt information is used to prompt a user whether to store a learning result of a driving parameter in the current trip; and
receiving a storage instruction entered by a user, wherein the storage instruction is used to instruct to store the learning result of the driving parameter in the current trip.

11. The method according to claim 10, wherein the method further comprises:
deleting the learning result of the driving parameter in the current trip if a deletion instruction entered by the user is received.

12. The method according to any one of claims 1 to 11, wherein the method further comprises:

comparing the learning result with a preset threshold range; and
updating the learning result based on the preset threshold range if the learning result is beyond the preset threshold range.

13. The method according to claim 12, wherein the updating the learning result based on the preset threshold range if the learning result is beyond the preset threshold range comprises:

updating the learning result to an upper limit value of the preset threshold range if the learning result is greater than the upper limit value of the preset threshold range; or
updating the learning result to a lower limit value of the preset threshold range if the learning result is less than the lower limit value of the preset threshold range.

14. The method according to any one of claims 1 to 11, wherein the method further comprises:

comparing the learning result with a plurality of preset values;
determining a target preset value that is in the plurality of preset values and that has a smallest difference from the learning result; and
updating the learning result to the target preset value.

15. The method according to any one of claims 1 to 14, wherein the method further comprises:

outputting the learning result to a user interface.

16. The method according to claim 15, wherein before the obtaining driving data, the method further comprises:

identifying a target user currently driving a vehicle;
correspondingly, the obtaining driving data comprises:

obtaining driving data corresponding to the target user; and
the outputting the learning result to a user interface comprises:
storing a correspondence between the learning result and the target user, and outputting the correspondence to the user interface.

17. The method according to claim 16, wherein the identifying a target user currently driving a vehicle comprises:

obtaining information about the target user; and
matching the information about the target user with prestored user information, and determining a user corresponding to matched prestored user information as the target user.

18. The method according to claim 17, wherein the method further comprises:
outputting second prompt information if there is no prestored user information that matches the information about the target user, wherein the second prompt information is used to prompt the user whether to create a user.

19. The method according to claim 16, wherein the identifying a target user currently driving a vehicle comprises:

receiving an identity confirmation instruction entered by the user; and
determining the target user based on the identity confirmation instruction.

20. The method according to claim 16, wherein the method further comprises:

receiving an instruction for creating a user that is entered by the user; and
obtaining and storing user information.

21. The method according to any one of claims 1 to 20, wherein before the obtaining driving data, the method further comprises:
receiving an activation instruction entered by the user, wherein the activation instruction is used to instruct to start self-learning of the autonomous driving system.

22. The method according to claim 21, wherein the receiving an activation instruction entered by the user comprises:
receiving the activation instruction entered by the user through the user interface.

23. The method according to claim 21, wherein the receiving an activation instruction entered by the user comprises:
receiving the activation instruction entered by the user by using a physical button.

24. The method according to claim 21, wherein the receiving an activation instruction entered by the user comprises:
receiving a voice activation instruction entered by the user.

25. The method according to any one of claims 1 to 24, wherein the method further comprises:
sending the learning result to a target device.

26. The method according to claim 25, wherein the target device is a target vehicle, and before the sending the learning result to a target device, the method further comprises:

receiving a data migration instruction, wherein the data migration instruction is used to instruct to migrate the learning result to the target vehicle; and
the sending the learning result to a target device comprises:

determining whether an autonomous driving system of the target vehicle is the same as an autonomous driving system of a current vehicle;

if the autonomous driving system of the target vehicle is the same as the autonomous driving system of the current vehicle, continuing to determine whether a vehicle type of the target vehicle is the same as a vehicle type of the current vehicle; and
sending the learning result to the target vehicle if the vehicle type of the target vehicle is the same as the vehicle type of the current vehicle.

27. The method according to claim 26, wherein the method further comprises:
if the vehicle type of the target vehicle is different from the vehicle type of the current vehicle, performing parameter conversion on the learning result based on a system parameter that is in the target vehicle and that is related to autonomous driving performance, and sending a converted learning result to the target vehicle.

28. The method according to claim 26, wherein the method further comprises:
outputting prompt information if the autonomous driving system of the target vehicle is different from the autonomous driving system of the current vehicle, wherein the prompt information is used to prompt the user that migration of the learning result to the target vehicle is not supported.

29. A self-learning apparatus in an autonomous driving system, comprising:

an obtaining module, configured to obtain driving data;
a processing module, configured to remove abnormal data from the driving data to obtain to-be-processed data; and
a learning module, configured to select a to-be-learned driving parameter based on the to-be-processed data, and calculate the to-be-processed data according to a calculation rule corresponding to the driving parameter, to obtain a learning result of the driving parameter, wherein the learning result is used to indicate the autonomous driving system to set the driving parameter in an autonomous driving trip based on the learning result.

30. The apparatus according to claim 29, wherein the driving data comprises manual driving data and/or autonomous driving takeover data.

31. The apparatus according to claim 29, wherein the processing module is configured to:

determine the abnormal data in the driving data according to a preset rule; and
delete the abnormal data.

32. The apparatus according to claim 29, wherein the learning module is configured to:
select, from a plurality of preset scenarios, a target scenario that matches the to-be-processed data, and the driving parameter corresponding to the target scenario, wherein each preset scenario corresponds to at least one driving parameter.

33. The apparatus according to claim 32, wherein the learning module is specifically configured to:
calculate a driving data feature of the to-be-processed data, and compare the driving data feature of the to-be-processed data with a driving data feature of each of the plurality of preset scenarios, to obtain the target scenario that is in the plurality of preset scenarios and that matches the to-be-processed data.

34. The apparatus according to any one of claims 29 to 33, wherein the driving data comprises driving data of a current trip and/or driving data of a historical trip;

the processing module is configured to remove abnormal data from driving data of each of the current trip and/or the historical trip, to obtain to-be-processed data of each trip; and
the learning module is configured to: select a to-be-learned driving parameter in each trip based on the to-be-processed data of each trip, and calculate the to-be-processed data of each trip according to a calculation rule corresponding to the to-be-learned driving parameter in each trip, to obtain a learning result of the to-be-learned driving parameter in each trip; and process learning results of trips that have a same to-be-learned driving parameter, to obtain the learning result of the driving parameter.

35. The apparatus according to claim 34, wherein the learning module is configured to:
perform weighting processing on the learning results of the plurality of trips that have the same to-be-learned driving parameter, to obtain the learning result of the driving parameter.

**36.** The apparatus according to claim 34, wherein the learning module is configured to:

  process the learning results of the plurality of trips that have the same to-be-learned driving parameter, to obtain a current learning result of the driving parameter; and
  determine the current learning result as the learning result of the driving parameter if total duration of the trips that have the same to-be-learned driving parameter reaches preset duration, or a total mileage of the trips that have the same to-be-learned driving parameter reaches a preset mileage.

**37.** The apparatus according to claim 36, wherein the learning module is further configured to:
calculate a current learning progress of the driving parameter based on the preset duration and the total duration of the trips that have the same to-be-learned driving parameter, or based on the preset mileage and the total mileage of the trips that have the same to-be-learned driving parameter.

**38.** The apparatus according to claim 34, wherein when the driving data comprises driving data of a current trip, the apparatus further comprises:

  an output module, configured to output first prompt information, wherein the first prompt information is used to prompt a user whether to store a learning result of a driving parameter in the current trip, wherein
  the obtaining module is further configured to receive a storage instruction entered by a user, wherein the storage instruction is used to instruct to store the learning result of the driving parameter in the current trip.

**39.** The apparatus according to claim 38, wherein the learning module is further configured to:
delete the learning result of the driving parameter in the current trip if a deletion instruction entered by the user is received.

**40.** The apparatus according to any one of claims 29 to 39, wherein the learning module is specifically configured to:

  compare the learning result with a preset threshold range; and
  update the learning result based on the preset threshold range if the learning result is beyond the preset threshold range.

**41.** The apparatus according to claim 40, wherein the learning module is specifically configured to:

  update the learning result to an upper limit value of the preset threshold range if the learning result is greater than the upper limit value of the preset threshold range; or
  update the learning result to a lower limit value of the preset threshold range if the learning result is less than the lower limit value of the preset threshold range.

**42.** The apparatus according to any one of claims 29 to 39, wherein the learning module is specifically configured to:

  compare the learning result with a plurality of preset values;
  determine a target preset value that is in the plurality of preset values and that has a smallest difference from the learning result; and
  update the learning result to the target preset value.

**43.** The apparatus according to any one of claims 29 to 42, wherein the output module is configured to:
output the learning result to a user interface.

**44.** The apparatus according to claim 43, wherein

  the obtaining module is configured to identify a target user currently driving a vehicle;
  correspondingly, the obtaining module is further configured to:

    obtain driving data corresponding to the target user; and
    the output module is configured to:
    store a correspondence between the learning result and the target user, and output the correspondence to the user interface.

**45.** The apparatus according to claim 44, wherein the obtaining module is configured to:

obtain information about the target user; and
match the information about the target user with prestored user information, and determine a user corresponding to matched prestored user information as the target user.

**46.** The apparatus according to claim 45, wherein the output module is further configured to:
output second prompt information if there is no prestored user information that matches the information about the target user, wherein the second prompt information is used to prompt the user whether to create a user.

**47.** The apparatus according to claim 44, wherein the obtaining module is configured to:

receive an identity confirmation instruction entered by the user; and
determine the target user based on the identity confirmation instruction.

**48.** The apparatus according to claim 44, wherein the obtaining module is further configured to:

receive an instruction for creating a user that is entered by the user; and
obtain and store user information.

**49.** The apparatus according to any one of claims 29 to 48, wherein the obtaining module is further configured to:
receive an activation instruction entered by the user, wherein the activation instruction is used to instruct to start self-learning of the autonomous driving system.

**50.** The apparatus according to claim 49, wherein the obtaining module is specifically configured to:
receive the activation instruction entered by the user through the user interface.

**51.** The apparatus according to claim 49, wherein the obtaining module is configured to:
receive the activation instruction entered by the user by using a physical button.

**52.** The apparatus according to claim 49, wherein the obtaining module is configured to:
receive a voice activation instruction entered by the user.

**53.** The apparatus according to any one of claims 29 to 52, wherein
the output module is further configured to send the learning result to a target device.

**54.** The apparatus according to claim 53, wherein the target device is a target vehicle, wherein

the obtaining module is configured to receive a data migration instruction, wherein the data migration instruction is used to instruct to migrate the learning result to the target vehicle; and
the output module is configured to: determine whether an autonomous driving system of the target vehicle is the same as an autonomous driving system of a current vehicle;
if the autonomous driving system of the target vehicle is the same as the autonomous driving system of the current vehicle, continue to determine whether a vehicle type of the target vehicle is the same as a vehicle type of the current vehicle; and
send the learning result to the target vehicle if the vehicle type of the target vehicle is the same as the vehicle type of the current vehicle.

**55.** The apparatus according to claim 54, wherein the output module is further configured to:
if the vehicle type of the target vehicle is different from the vehicle type of the current vehicle, perform parameter conversion on the learning result based on a system parameter that is in the target vehicle and that is related to autonomous driving performance, and send a converted learning result to the target vehicle.

**56.** The apparatus according to claim 54, wherein the output module is further configured to:
output prompt information if the autonomous driving system of the target vehicle is different from the autonomous driving system of the current vehicle, wherein the prompt information is used to prompt the user that migration of the learning result to the target vehicle is not supported.

**57.** An electronic device, comprising a memory and a processor, wherein the memory is connected to the processor;

the memory is configured to store a computer program; and
the processor is configured to: when the computer program is executed, implement the method according to any one of claims 1 to 28.

**58.** A computer-readable storage medium, wherein the computer-readable storage medium stores a computer program, and when the computer program is executed by a processor, the method according to any one of claims 1 to 28 is implemented.

**59.** An autonomous driving vehicle, comprising the electronic device according to claim 57.

EP 4 155 856 A1

10

Vehicle

106

Another system ↔ Autonomous driving domain controller (101) ↔ Communications module (102)

20

Cloud

Server

105

Switch ↔ Central control screen (104) ↔ Intelligent cockpit domain controller (103)

30

User terminal

FIG. 1

Obtain driving data S201

Remove abnormal data from the driving data to obtain to-be-processed data S202

Select a to-be-learned driving parameter based on the to-be-processed data, and calculate the to-be-processed data according to a calculation rule corresponding to the driving parameter, to obtain a learning result of the driving parameter S203

FIG. 2

Select, from a plurality of preset scenarios, a target scenario that matches to-be-processed data, and a driving parameter corresponding to the target scenario — S301

Calculate the to-be-processed data according to a calculation rule corresponding to the driving parameter, to obtain a learning result of the driving parameter in the current trip — S302

Process learning results of trips that have a same to-be-learned driving parameter, to obtain the learning result of the driving parameter — S303

Output the learning result to a user interface — S304

FIG. 3

Hello, XX!
Are you sure you want to keep and process the data of this trip?

Yes          No

FIG. 4

Factory calibration (default)                                    √

User 1                    Learning progress 70%

User 2

Create user

FIG. 5

3.5 ┈┈┈┈┈┈┈┈┈┈┈┈┈┈┈┈┈┈┈

1.2 ┈┈┈┈┈┈┈┈┈┈┈┈┈┈┈┈┈┈┈

• Learning value

○ Lower limit value
  of a preset range

10   20              120  130    Speed
                                 (km/s)

FIG. 6

FIG. 7

**Adaptive cruise time headway**

Nearest                                                                    √

Closer (recommended by XX after learning)

Medium

Farther

Farthest

FIG. 8

Factory calibration (default)

User 1

View details
Delete user
Relearn
Continue learning
Backup data for
and migration

√

User 2

Create user

Details about user 1

Adaptive cruise time headway    Closer

Front collision alarm timing    Medium

XXXXXXX    XX

FIG. 9

```
┌─────────────────────────────────────────────────────┐      S1001
│                                                       │
│     Receive an activation instruction entered by a user │
│                                                       │
└─────────────────────────────────────────────────────┘
                          │
                          ▼
┌─────────────────────────────────────────────────────┐      S1002
│                                                       │
│   Receive an instruction for creating a new user that is entered │
│                      by the user                      │
└─────────────────────────────────────────────────────┘
                          │
                          ▼
┌─────────────────────────────────────────────────────┐      S1003
│                                                       │
│           Obtain and store user information           │
│                                                       │
└─────────────────────────────────────────────────────┘
                          │
                          ▼
┌─────────────────────────────────────────────────────┐      S1004
│                                                       │
│     Identify a target user currently driving a vehicle │
│                                                       │
└─────────────────────────────────────────────────────┘
```

FIG. 10

Autonomous driving user
behavior learning

XXXXXXX

XXXXXXX

→

Safety prompt XXXXXXXX

Agree          Disagree

Dear user, the learning function
is enabled, you can use the
vehicle normally, and you will
see the completion prompt after
the learning is complete.

FIG. 11

Select your identity

User 1

User 2

User 3

FIG. 12

Are you user 1?

Yes          No

FIG. 13

Select the identity to switch to

User 1

User 2

Create a user

Do not study, exit

FIG. 14

Receive a data migration instruction — S1501

Determine whether an autonomous driving system of a target vehicle is the same as an autonomous driving system of a current vehicle — S1502

No

Yes

Determine whether a vehicle type of the target vehicle is the same as a vehicle type of the current vehicle — S1503

No

Yes

Send a learning result to the target vehicle — S1504

Perform parameter conversion on the learning result based on a system parameter that is in the target vehicle and that is related to autonomous driving performance, and send a converted learning result to the target vehicle — S1505

Output prompt information — S1506

FIG. 15

160

Self-learning apparatus in an
autonomous driving system

Obtaining module — 1601

Processing module — 1602

Learning module — 1603

Output module — 1604

FIG. 16

170

Electronic device

Memory — 1701

1703

Processor — 1702

FIG. 17

## INTERNATIONAL SEARCH REPORT

| International application No. |
|---|
| **PCT/CN2020/095069** |

| A. | CLASSIFICATION OF SUBJECT MATTER |
|---|---|

G05D 1/02(2020.01)i

According to International Patent Classification (IPC) or to both national classification and IPC

| B. | FIELDS SEARCHED |
|---|---|

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

CNPAT, CNKI, WPI, EPODOC: 自动驾驶, 异常, 剔除, 参数, 场景, 匹配, 阈值, 更新, 迁移, automatic drive, abnormal, eliminate, parameter, scene, match, threshold, update, transfer.

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 107016193 A (INSTITUTE OF AUTOMATION, CHINESE ACADEMY OF SCIENCES) 04 August 2017 (2017-08-04)<br>      description, paragraphs [0057]-[0105] and figures 1-6 | 1-59 |
| Y | CN 106548644 A (SHENZHEN MINGCHUANG AUTOMATIC CONTROL TECHNOLOGY CO., LTD.) 29 March 2017 (2017-03-29)<br>      description, paragraphs [0013]-[0067] and figures 1-2 | 1-59 |
| Y | CN 105818810 A (BAIDU ONLINE NETWORK TECHNOLOGY (BEIJING) CO., LTD.) 03 August 2016 (2016-08-03)<br>      description, paragraphs [0017]-[0087] and figures 1-7 | 16-28, 44-56 |
| A | CN 104484911 A (YUNNAN UNIVERSITY) 01 April 2015 (2015-04-01)<br>      entire document | 1-59 |
| A | KR 20040060622 A (SK CORP.) 06 July 2004 (2004-07-06)<br>      entire document | 1-59 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 February 2021** | **24 February 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/095069**

| Patent document cited in search report | | | Publication date (day/month/year) | Patent family member(s) | | | Publication date (day/month/year) |
|---|---|---|---|---|---|---|---|
| CN | 107016193 | A | 04 August 2017 | CN | 107016193 | B | 14 February 2020 |
| CN | 106548644 | A | 29 March 2017 | | None | | |
| CN | 105818810 | A | 03 August 2016 | CN | 105818810 | B | 27 July 2018 |
| CN | 104484911 | A | 01 April 2015 | CN | 104484911 | B | 24 August 2016 |
| KR | 20040060622 | A | 06 July 2004 | KR | 100532140 | B1 | 29 November 2005 |

Form PCT/ISA/210 (patent family annex) (January 2015)